# EUROPÄISCHE PATENTANMELDUNG

(11) **EP 2 942 610 A2**
(43) Veröffentlichungstag der Anmeldung: **11.11.2015**
(21) Anmeldenummer: 15158197.2
(22) Anmeldetag: 09.03.2015
(51) Int. Cl.: G01L 5/04, G01L 5/10, G01M 13/02

(54) **Kettenüberwachungseinrichtung und Verfahren zur Kettenüberwachung**

(30) Priorität: 08.05.2014 DE 102014208635
(71) Anmelder: ROBERT BOSCH GMBH, 70442 Stuttgart (DE)
(72) Erfinder: Winkel, Hans-Heinrich, 31311 Uetze (DE); Hennig, Dirk, 31226 Peine (DE)

(57) **Zusammenfassung**

Die vorliegende Erfindung betrifft eine Kettenüberwachungseinrichtung (1) für eine Kette (4) eines in einer Kettenebene laufenden Kettentriebs, umfassend einen in Bezug auf den Kettentrieb stationär angeordneten, berührungslos messenden Kettensensor (10, 11), der zur Erfassung eines Leertrums (6, 6a) des Kettentriebs eingerichtet ist, und eine Signaleinrichtung, welche zur Abgabe eines Kettenüberwachungssignals in Abhängigkeit eines Erfassungsergebnisses des Kettensensors (10, 11) eingerichtet ist.

## Beschreibung

Diese Erfindung betrifft eine Kettenüberwachungseinrichtung für eine Kette eines in einer Kettenebene laufenden Kettentriebs. Weiter betrifft die Erfindung ein Verfahren zur Überwachung einer solchen Kette.

### Stand der Technik

Eine Kette ist hier im Sinne einer eindimensional beweglichen Antriebskette zu verstehen. Solche Ketten sind beispielsweise als Bolzenkette, Buchsenkette, Rollenkette, Lagerkragenkette, Lamellenkette, Rotarykette oder Zahnkette ausgestaltet. Weiter sind Transportketten und Sonderketten mit davon abweichender Ausgestaltung bekannt.

Der Einsatz einer Kette als Zugmittel in einem Kettentrieb bedeutet typischerweise, dass die Kette zwischen wenigstens zwei Kettenrädern läuft und in wenigstens einen Lasttrum und wenigstens einen Leertrum unterteilbar ist. Nach der Abgabe zu übertragender Energie an ein Kettenrad läuft die Kette über den Leertrum zu einem anderen Kettenrad zurück. Auf dem Leertrum liegt dabei keine Zugkraft an, sodass dieser durchhängen kann, wenn die Kette nicht vorgespannt ist. Dies ist dahingehend gefährlich, dass die Kette von einem Kettenrad abspringen kann. Außerdem führen Lastwechsel zu Stößen in dem Kettentrieb, wenn der Leertrum bei einer Lastrichtungsumkehr zum Lasttrum wird. Daher werden Kettentriebe ohne automatischem Kettenspanner hin und wieder nachgespannt. Durch Verschleiß der Kettengelenke und durch Materialdehnung dehnt sich die Kette im Laufe des Gebrauchs, sodass der Durchhang sich wieder vergrößert, wodurch die oben genannten Gefahren entstehen. Ein Überspannen der Kette mit hoher Vorspannung ist ebenfalls schädlich, da Kette und Lager durch die Vorspannkraft zusätzlich belastet werden, was zu unnötigen Verschleiß und rauerem Auf- und Ablauf der Kette von den Kettenrädern führt. Es ist daher wünschenswert, dass die Kette stets eine geeignete Spannung bzw. einen geeigneten Durchhang aufweist. Dies muss üblicherweise von einem Benutzer, Fahrer oder Wartungspersonal manuell geprüft werden.

### Offenbarung der Erfindung

Gegenstand der Erfindung ist eine Kettenüberwachungseinrichtung, die einen Kettensensor umfasst, der sich nicht mit dem Kettentrieb mitbewegt. Dadurch ergibt sich eine Relativbewegung zwischen dem Kettensensor und der Kette. Der Kettensensor erfasst den Leertrum der Kette berührungslos und liefert ein elektrisches Signal, wenngleich er auch primär ein nichtelektrisches Messprinzip verwenden kann. Weiter umfasst die Kettenüberwachungseinrichtung eine Signaleinrichtung, die ein Kettenüberwachungssignal abgeben kann. Das Kettenüberwachungssignal wird in Abhängigkeit eines Erfassungsergebnisses des Kettensensors erzeugt.

Mit Überwachung ist in dieser Patenanmeldung nicht zwingend eine Dauerüberwachung gemeint, sondern auch eine gelegentliche Auslösung einer Erfassung der Kette über einen gewissen Zeitraum. Die Auslösung einer solchen Überwachung kann beispielsweise auf bestimmte Ereignisse hin oder auch auf Benutzeranforderung hin ausgelöst werden. Insbesondere wird die Überwachung nach vorgegebenen Zeitintervallen wiederholt ausgelöst.

Die Erfindung kann in einer Vielzahl von technischen Anwendungen verwendet werden, etwa in Verbrennungsmotoren, beispielsweise für den Antrieb von Nockenwellen oder Ausgleichswellen, für den Antrieb von Nebenaggregaten von Fahrzeugmotoren, insbesondere, aber nicht ausschließlich, bei Fahrzeugen mit hohem Ausstattungsgrad, die typischerweise mit vielen Sensoren, Aktuatoren und Steuergeräten ausgestattet sind. Weiter kann die Erfindung für Antriebsketten von Fahrrädern, motorisierten zwei-, drei- oder vierrädrigen Fahrzeugen oder Maschinen wie etwa Fertigungs- oder Transporteinrichtungen, verwendet werden.

Die Unteransprüche zeigen bevorzugte Weiterbildungen der Erfindung.

In einer Ausführungsform der Kettenüberwachungseinrichtung ist der Kettensensor außerhalb der Kettenebene an dem Leertrum angeordnet. Der Kettensensor ist dazu eingerichtet, eine parallel zu der Kettenebene liegende Seite des Leertrums anzumessen. Der Kettensensor liegt dazu vorzugsweise von der Kette aus gesehen neben dieser Seite der Kette. Eine Erfassungsrichtung des Kettensensors, in der der Kettensensor die Kette erfasst, ist dabei vorzugsweise in einem rechten Winkel oder zumindest schräg zu der Kettenebene ausgerichtet. Die erfasste Seite des Leertrums muss dabei nicht vollständig eben sein, sondern es können Teile der Kette, wie etwa Laschen oder Bolzen, oder auch nur eine Kante der Kette erfasst werden. Durch die Anordnung des Kettensensors außerhalb der Kettenebene ergibt sich insbesondere bei einer eindimensional beweglichen Kette eine nur geringe Gefahr, dass der Sensor von der Kette getroffen werden kann. Diese Anordnung erfordert typischerweise auch, dass der Sensor den Leertrum in verschiedenen Durchhangpositionen, also in einem Bereich in der Kettenebene, erfassen kann.

In einer weiteren Ausführungsform der Kettenüberwachungseinrichtung liegt die Erfassungsrichtung des Sensors zumindest näherungsweise in der Kettenebene und ist auf den Leertrum des Kettentriebes gerichtet. Vorzugsweise ist dabei der Kettensensor in oder nahe der Kettenebene positioniert. Durch diese Anordnung und Ausrichtung ergibt sich, dass der Abstand zwischen dem Leertrum und dem Kettensensor in Abhängigkeit des Durchhangs beziehungsweise der Position des Leertrums variabel ist. Die zu erfassende Seite des Leertrums liegt dementsprechend quer zu der Kettenebene. Ein Vorteil einer solchen Anordnung des Kettensensors kann sein, dass die Messstelle, innerhalb der der Kettensensor in seiner Erfassungsrichtung den Leertrum erfasst, relativ klein sein kann, da insbesondere bei einer eindimensional beweglichen Kette ein nur geringes seitliches Ausweichen des Leertrums quer zu seiner Hauptbewegungsrichtung zu erwarten ist.

In einer weiteren Ausführungsform der Kettenüberwachungseinrichtung ist der Kettensensor als Kettenpositionssensor ausgeführt, der die Position des Leertrums erfassen kann, um aus der Position auf die Spannung des Leertrums zu schließen. Der Durchhang des Leertrums findet in einer Richtung quer zu der Hauptbewegungsrichtung des Leertrums und in der Kettenebene statt. Die Signaleinrichtung ist dazu eingerichtet, ein Kettenüberwachungssignal in Abhängigkeit von einer oder mehreren erfassten Positionen des Leertrums abzugeben. Dies kann insbesondere stattfinden, wenn ein unzulässig hoher Durchhang des Leertrums erfasst wurde. Neben der Erfassung des Durchhangs ist es auch möglich, Schwingungen des Leertrums zu erfassen. Dazu werden vorzugsweise die maximalen Ausschläge der Schwingung erfasst. Alternativ kann durch Mehrfacherfassung von Positionen des Leertrums und deren zeitlichem Verlauf mathematisch auf die Amplitude der Schwingung geschlossen werden.

Wenn der Kettenpositionssensor in oder nahe der Kettenebene angeordnet ist, ist dieser ein Sensor, der eine Bewegung des Messobjektes auf den Sensor zu oder von dem Sensor weg beziehungsweise eine Position in dieser Bewegungsrichtung erkennen kann. Wenn der Kettensensor außerhalb der Kettenebene angeordnet ist, hat dieser einen linearen oder flächigen Erfassungsbereich, der sich parallel zu der Kettenebene erstreckt und homogen und/oder heterogen und/oder inhomogen mit einzelnen Sensoren bestückt sein kann. Der Kettensensor erkennt dann die Position des Leertrums innerhalb seines Erfassungsbereiches. Vorzugsweise ist der Erfassungsbereich dabei so groß ausgestaltet, dass er einen zu erwartenden Durchhangbereich des Leertrums überdeckt.

Vorzugsweise ist der Kettenpositionssensor zumindest näherungsweise in der Mitte zwischen den Leertrum begrenzenden Kettenrädern angeordnet. Auf diese Weise befindet sich in den meisten Fällen der größte Durchhang entlang des Leertrums an dem Kettensensor, sodass er gut erfassbar ist. Wird ein Kettenpositionssensor mit einer hohen Genauigkeit verwendet, kann es vorteilhaft sein, diesen in der Nähe eines der Kettenräder anzuordnen. Der Erfassungsbereich kann dann kleiner gehalten werden und in vielen Fällen damit einhergehend auch der Positionssensor selbst.

In einer weiteren Ausführungsform der Kettenüberwachungseinrichtung ist der Kettenpositionssensor als ein elektromagnetischer, insbesondere induktiver Sensor, als ein Licht (sichtbar oder unsichtbar) aussendender optischer Sensor, der zum Anstrahlen des Leertrums eingerichtet ist, und der Lichtreflexionen von dem Leertrum wieder auffangen kann, um aus den Reflexen auf die Position des Leertrums zu schließen, oder als ein Ultraschallsensor ausgebildet ist. Wenn es sich um einen induktiven Sensor handelt, ist die Kette zumindest in für den Sensor geeignetem Ausmaß elektrisch leitfähig oder ferromagnetisch. Ein optischer Sensor kann zur Lichtaussendung eine Leuchtdiode umfassen. Weiter umfasst ein solcher optischer Sensor einen Lichtsignalempfänger. Die genannten Sensortypen sind zur Anordnung außerhalb der Kettenebene wie oben beschrieben geeignet. Solche Sensoren können jedoch ebenso in der Kettenebene angeordnet sein, wobei, wie oben beschrieben, sich unterschiedliche Anordnungen der Erfassungsrichtung sowie unterschiedliche Größen des Erfassungsfeldes ergeben.

In einer weiteren Ausführungsform der Kettenüberwachungseinrichtung gibt die Signaleinrichtung ein Kettenüberwachungssignal aus, das insbesondere anzeigt, dass die Kettenspannung zu gering ist oder sich die Kette zu stark gelängt hat. Das Kettenüberwachungssignal wird vorzugsweise ausgegeben, wenn der erfasste Durchhang größer als ein Schwellenwert ist. Dazu wird bevorzugt eine Abstands- bzw. Positionsmessung in Bezug auf eine feste Position des Kettenpositionssensors durchgeführt. Wenn der Leertrum schwingt, was auch bei zu stark gespanntem Leertrum, der nicht durchhängt, vorkommen kann, kann das Kettenüberwachungssignal ausgegeben werden, wenn die Amplitude der Schwingung größer bzw. kleiner als ein Schwellenwert ist. Mit der Ausgabe des Kettenüberwachungssignals kann dazu aufgefordert werden, die Kette zu spannen, insbesondere bei zu großem Durchhang oder großen Schwingungsamplituden. Es ist auch denkbar, dazu aufzufordern, die Kette zu entspannen, insbesondere, wenn kleine Schwingungsamplituden mit höherer Frequenz als bei durchhängender Kette gemessen werden, die auf einen überspannten Leertrum schließen lassen. Ein Riss der Kette kann dadurch erkannt werden, dass innerhalb des Erfassungsbereiches der Leertrum nicht erfasst werden kann.

In einer weiteren Ausführungsform der Kettenüberwachungseinrichtung ist der Kettensensor als ein Kettentemperatursensor ausgestaltet. Mit diesem ist eine Temperatur der Kette erfassbar. Anhand der Kettentemperatur kann erkannt werden, in welchem Ausmaß die Kette bei ihrer Bewegung durch den Kettentrieb Reibung unterliegt, die insbesondere beim Auflaufen und Ablaufen von den Kettenrädern, das heißt bei Bewegungen der Kette wirksam ist. Diese Reibung erhöht die Temperatur der Kette. Die Reibung selbst hängt wiederum vom Schmierungszustand und von der Sauberkeit der Kette ab. Auch eine korrodierte Kette, insbesondere in den Gelenken, weist erhöhte Reibung auf. In Fällen, in denen die Kette sich nach einer Inbetriebnahme langsam erwärmt, kann es sinnvoll sein, die den Verlauf der Kettentemperatur für die Ausgabe eines Kettenreibungswarnsignals heranzuziehen. Insbesondere kann ein Kettenreibungswarnsignal abgegeben werden, wenn sich ein Unterschied einer Kettentemperatur bei der Inbetriebnahme und einer aktuellen Kettentemperatur ergibt, der oberhalb eines Schwellenwertes liegt. Es ist denkbar, den als Kettentemperatursensor ausgestalteten Kettensensor mit einem Kettenpositionssensor nach einer der vorgenannten Ausführungsformen zu kombinieren. Ein solcher Kettensensor kann den Kettentemperatursensor und den Kettenpositionssensor in einem einzigen Gehäuse umfassen und somit Bedarf zur Kettenspannung, -entspannung sowie zur Wartung (Reinigung, Fetten usw.) signalisieren.

In einer Ausführungsform der Kettenüberwachungseinrichtung gemäß einer Ausführungsform mit Kettentemperatursensor weist die Kettenüberwachungseinrichtung zusätzlich einen Umgebungstemperatursensor auf, mit dem eine Umgebungstemperatur der Kette ermittelbar ist. Auf diese Weise kann eine Temperaturerhöhung gegenüber der Umgebungstemperatur aus einer Differenz der von dem Kettentemperatursensor und dem Umgebungstemperatursensor gemessenen Temperaturen ermittelt werden. Wenn diese Differenztemperatur größer als ein Schwellenwert ist, kann mittels der Signaleinrichtung von der Kettenüberwachungseinrichtung ein Kettenreibungswarnsignal abgegeben werden. Es kann auch ein Verlauf dieser Differenztemperatur nach einer Inbetriebnahme zur Ausgabe eines Kettenreibungswarnsignals herangezogen werden. Mit einem Kettenreibungswarnsignal kann eine Aufforderung verbunden sein, den Kettenzustand zu verbessern, insbesondere die Kette zu säubern und zu schmieren.

In einer Ausführungsform der Kettenüberwachungseinrichtung ist der Kettentemperatursensor als ein Infrarotsensor ausgeführt. Ein Infrarotsensor ist zu einer berührungslosen Messung geeignet und kann somit stationär in Bezug auf die laufende Kette angeordnet sein.

In einer weiteren Ausführungsform der Kettenüberwachungseinrichtung bildet ein Steuergerät eines Fahrzeugs einen Teil der Kettenüberwachungseinrichtung. Dieses kann insbesondere ein Motorsteuergerät sein. Das Steuergerät ist mit dem Kettensensor verbunden und empfängt von ihm Signale. Diese Signale werden zur Erzeugung eines Kettenüberwachungssignals von dem Steuergerät verarbeitet. Dabei können auch Signale von anderen Sensoren des Fahrzeugs in die Erzeugung des Kettenüberwachungssignals einfließen. Denkbar ist außerdem, in einem nur für die Kettenüberwachung vorgesehenen Steuergerät Signale von anderen Sensoren eines Fahrzeuges zu verarbeiten.

Für alle vorgenannten Ausführungsformen gilt, dass vorzugsweise schon bekannte Sensoren als Kettensensoren verwendet werden, insbesondere solche aus einer Massenproduktion. Auf diese Weise können die Kosten für die Kettenüberwachungseinrichtung gering gehalten werden. Insbesondere kann der Kettensensor als ein Parkdistanzsensor oder als ein Drehzahlgeber, insbesondere ein induktiver Kurbelwellensensor ausgestaltet sein. Es können die zugehörigen Auswerteeinheiten zu diesen Sensoren zum Einsatz kommen.

In einem weiteren Aspekt der vorliegenden Erfindung wird ein Verfahren zur Überwachung einer Kette in einem Kettentrieb vorgeschlagen. Dazu wird ein in Bezug auf den bewegten Kettentrieb feststehender Kettensensor eingesetzt. Dieser erfasst einen Leertrum des Kettentriebs. Mittels des Kettensensors wird ein Zustand der Kette überwacht. Es wird ein Kettenüberwachungssignal ausgegeben, das in Abhängigkeit von Signalen oder Daten von dem Kettensensor erzeugt wird. Es ergeben sich die schon in Bezug auf die Kettenüberwachungseinrichtung diskutierten Vorteile.

In einer Ausführungsform des Verfahrens wird eine Position des Leertrums oder eine Schwingungsamplitude des Leertrums mit dem Kettensensor erfasst. Dieser ist dazu als Kettenpositionssensor im Sinne der oben beschriebenen Ausführungsformen einer Kettenüberwachungseinrichtung ausgestaltet. Wenn ermittelt wird, dass ein ungünstiger Spannungszustand bzw. Durchhang der Kette vorliegt, kann ein Kettenspannungswarnsignal ausgegeben werden. Dieses kann mit einer Aufforderung zum Spannen der Kette oder einem Entlasten der Kette verbunden sein. Zur Bestimmung der Spannung der Kette wird ein Durchhang oder eine Schwingung des Leertrums des Kettentriebes erfasst. Dazu kann verfahren werden, wie schon in Bezug auf entsprechende Ausführungsformen der Kettenüberwachungseinrichtung beschrieben wurde.

In einer weiteren Ausführungsform des Verfahrens wird eine Kettenreibung der Kette überwacht. Dazu wird die Temperatur der Kette an dem Leertrum erfasst. Insbesondere kann auch ein Verlauf der Temperatur der Kette berücksichtigt werden. Besonders bevorzugt wird alternativ oder zusätzlich zu der Verlaufsberücksichtigung eine Umgebungstemperatur erfasst, um eine Differenzmessung zu ermöglichen. Auch dazu sei auf die oben beschriebenen Ausführungsformen der Kettenüberwachungseinrichtung verwiesen.

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung des Kettentriebes mit einem Kettensensor in einer ersten Ausführungsform, und
- Figur 2: eine schematische Darstellung des Kettentriebes mit einem Sensor in einer zweiten Ausführungsform.

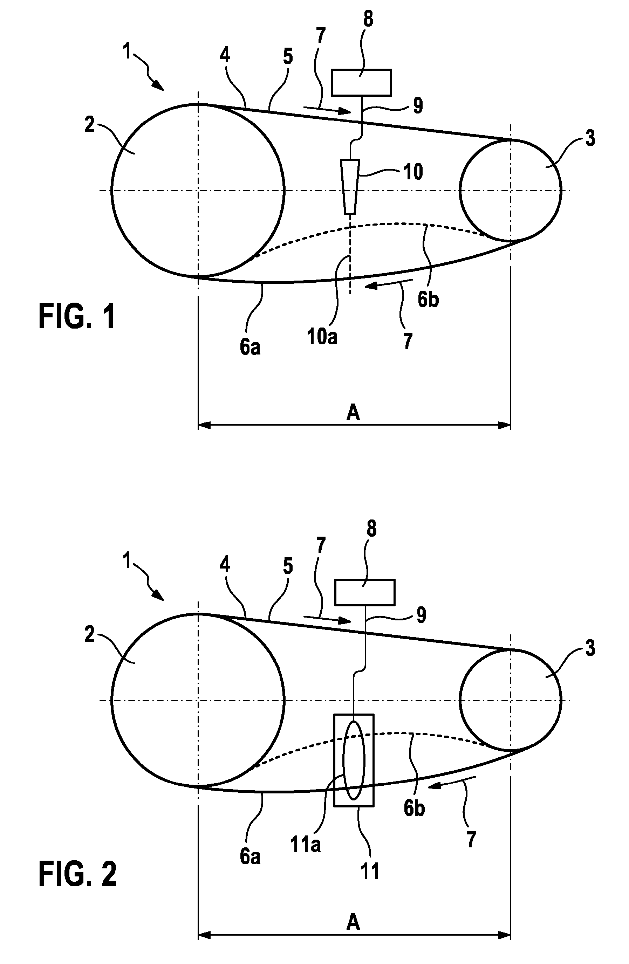

Figur 1 zeigt eine schematische Darstellung eines Kettentriebes 1, der ein erstes Kettenrad 2, ein zweites Kettenrad 3 und eine Kette 4 umfasst. Die Laufrichtung der Kette 4 im Kettentrieb 1 ist durch zwei Pfeile 7 angedeutet. Da die Kette 4 als Zugmittel ausgebildet ist, ist das Kettenrad 3 das Antriebskettenrad, von welchem Energie über einen Lasttrum 5 der Kette 4 auf das Abtriebskettenrad 2 übertragen wird. Nachdem die Kette 4 über das Kettenrad 3 gelaufen ist, erreicht sie den Leertrum 6a, 6b, über den die Kette von dem Kettenrad 3 zu dem Kettenrad 2 zurückläuft. Der Mittelpunkt des Kettenrades 2 hat von dem Mittelpunkt des Kettenrades 3 einen Abstand A. In der Darstellung in Figur 1 führt dieser Abstand A dazu, dass der Leertrum 6a durchhängt. Durch Spannen der Kette, das heißt durch Vergrößerung des Abstandes A, kann der Durchhang des Leertrums 6a verringert werden. In Figur 1 ist ein weiterer möglicher Verlauf des Leertrums 6b eingezeichnet. Dieser deutet an, dass sich der Durchhang des Leertrums 6a auch nach oben ausbilden kann. Dies tritt insbesondere ein, wenn der Leertrum 6a, 6b schwingt. Dabei nimmt er Stellungen zwischen den schematisch gezeigten Extremalstellungen des schwingenden Leertrums 6a, 6b ein. Die Position des Leertrums 6a oder/und eine Schwingungsamplitude des Leertrums 6a, 6b zwischen seinen Extremalstellungen kann mit einem Kettenpositionssensor 10 erfasst werden. Dieser Kettenpositionssensor 10 weist eine Messrichtung 10a auf, welche von dem Kettenpositionssensor 10 auf den Leertrum 6a, 6b gerichtet ist. Ein quer zu der Erfassungsrichtung 10a liegender Erfassungsbereich des Kettenpositionssensors 10 hat eine Größe, die ausreicht, um den Leertrum 6a, 6b sicher zu erfassen, auch wenn dieser kleinere Bewegungen aus der Zeichenebene heraus macht. Der Sensor 10 arbeitet berührungslos. Der Kettenpositionssensor 10 ist in der Kettenebene, die der Zeichenebene entspricht, und in der die Kette 4 läuft, angeordnet. Der Kettenpositionssensor 10 ist in dieser Ausführungsform von der Kette 4 umschlossen. Der Kettenpositionssensor 10 befindet sich in etwa in der Mitte zwischen dem Lasttrum 5 und dem Leertrum 6a in seiner Durchhangposition. Der Kettenpositionssensor 10 ist ferner etwa in der Mitte zwischen den Mittelpunkten der beiden Kettenräder 2 und 3 angeordnet. Der Messbereich des Kettenpositionssensors 10 reicht aus, um die Extremalstellungen des Leertrums 6a, 6b zu erfassen. In der Auswerteeinheit 8 wird die Kettenspannung der Kette 4 anhand des Durchhangs der Kette 4 am Leertrum 6a bestimmt, indem die Position des Leertrums 6a relativ zu dem Kettenpositionssensor 10 ausgewertet wird. Überschreitet der Abstand des Leertrums 6a von dem Kettenpositionssensor 10 einen Schwellenwert, so veranlasst die Auswerteeinheit 8 die Ausgabe eines Kettenüberwachungssignals, das insbesondere mit der Aufforderung verbunden ist, die Kette zu spannen und/oder gegebenenfalls zu warten (Reinigen, Fetten, usw.). In diesem Fall reicht es aus, wenn der Messbereich des Kettenpositionssensors einen maximalen Durchhang des Leertrums 6a und die Position eines straff gespannten Leertraums (nicht dargestellt) zwischen den Kettenrädern 2 und 3 umfasst. Alternativ kann die Kettenspannung ermittelt werden, indem eine Schwingungsamplitude zwischen den Extremalpositionen des Leertrums 6a, 6b ausgewertet wird. Der Messbereich reicht dann aus, um die Extremalpositionen zu erfassen, insbesondere auch bei großem Durchhang. Wenn die erfasste Schwingungsamplitude einen Schwellenwert überschreitet, kann die Signaleinrichtung ein Kettenüberwachungssignal ausgeben, das mit der Aufforderung verbunden sein kann, die Kette 4 zu spannen und/oder gegebenenfalls zu warten (Reinigen, Fetten, usw.).

Der Kettenpositionssensor 10 gibt ein elektrisches Signal über eine Leitung 9 an eine Auswerteeinheit 8 weiter, die auch eine Signaleinrichtung umfassen kann, welche ein Signal ausgeben kann. Die Signaleinrichtung kann jedoch auch separat von der Auswerteeinheit 8 ausgeführt sein. Die Auswerteeinheit 8 kann ein Teil einer Steuereinrichtung eines Fahrzeugs sein, etwa einer Motorsteuerung.

Der Kettenpositionssensor 10 kann mit einer berührungslosen Temperaturmesseinrichtung kombiniert sein, welche zur Erfassung der Temperatur der Kette 4 eingerichtet ist. Der Erfassungsbereich des Kettentemperatursensors muss nicht mit dem Erfassungsbereich des Kettenpositionssensors 10 übereinstimmen. Vorzugsweise weist der Kettentemperatursensor 10 zusätzlich eine nicht explizit dargestellte Umgebungstemperaturmesseinrichtung auf, mit der die Umgebungstemperatur erfassbar ist. Aus einer Differenz der gemessenen Kettentemperatur und der Umgebungstemperatur lässt sich auf den Reibungszustand der Kette schließen. Überschreitet diese Differenztemperatur einen Schwellenwert, so kann die Signaleinheit ein Kettenüberwachungssignal ausgeben, das mit der Aufforderung verbunden sein kann, die Kette 4 zu warten (Reinigung, Fetten, usw.).

Figur 2 zeigt eine weitere Ausführungsform der Kettenüberwachungseinrichtung. Große Teile der Figur 2 sind mit Teilen der Figur 1 identisch. Gleiche Elemente sind mit gleichen Bezugsziffern bezeichnet und werden nicht noch einmal gesondert beschrieben; es sei auf die Beschreibung von Figur 1 verwiesen. Im Folgenden wird daher nur auf die Unterschiede zu Figur 1 eingegangen.

Figur 2 unterscheidet sich von Figur 1 durch einen andersartigen Kettenpositionssensor 11. Dieser ist außerhalb der Kettenebene und neben dem Leertrum 6a, 6b angeordnet. Der Kettenpositionssensor 11 weist einen Erfassungsbereich 11a auf, welcher parallel zu der Kettenebene angeordnet ist. Somit kann eine Position des Leertrums 6a, 6b, der sich vor dem Kettenpositionssensor 11 und in dessen Erfassungsbereich 11a befindet, erfasst werden. Wie in Bezug auf Figur 1 beschrieben, können somit eine Durchhangposition des Leertrums 6a und eine Schwingungsamplitude zwischen Extremalstellungen des Leertrums 6a, 6b erfasst werden. Ebenso wie der in Figur 1 beschriebene Kettenpositionssensor 10 kann der Kettenpositionssensor 11 in der Ausführungsform der Figur 2 mit einem Kettentemperatursensor verbunden sein, der nicht explizit dargestellt ist. Es sei auf die Ausführungen zu dem Kettentemperatursensor in Bezug auf Figur 1 verwiesen. Der Erfassungsbereich des Kettentemperatursensors muss nicht mit dem Erfassungsbereich 11a des Kettenpositionssensors 11 übereinstimmen.

## Patentansprüche

1. Kettenüberwachungseinrichtung (1) für eine Kette (4) eines in einer Kettenebene laufenden Kettentriebs,
**gekennzeichnet durch** einen in Bezug auf den Kettentrieb stationär angeordneten, berührungslos messenden Kettensensor (10, 11), der zur Erfassung eines Leertrums (6a, 6b) des Kettentriebs eingerichtet ist, und **durch** eine Signaleinrichtung, welche zur Abgabe eines Kettenüberwachungssignals in Abhängigkeit eines Erfassungsergebnisses des Kettensensors (10, 11) eingerichtet ist.

2. Kettenüberwachungseinrichtung (1) nach Anspruch 1, **dadurch gekennzeichnet, dass** mit dem Kettensensor (11) eine wenigstens näherungsweise parallel zu der Kettenebene liegende Seite der des Leertrums (6a, 6b) erfassbar ist und der Kettensensor (11) außerhalb der Kettenebene positioniert ist, wobei der Leertrum (6a, 6b) in einer Erfassungsrichtung wenigstens näherungsweise quer zu der Kettenebene mit dem Kettensensor (11) innerhalb eines parallel zu der Kettenebene angeordneten Erfassungsbereichs (11a) erfassbar ist.

3. Kettenüberwachungseinrichtung (1) nach Anspruch 1, **dadurch gekennzeichnet, dass** eine zu der Kettenebene wenigstens näherungsweise rechtwinklig angeordnete Seite des Leertrums (6a, 6b) erfassbar ist, und der Kettensensor (10) in oder nahe der Kettenebene positioniert ist, wobei der Leertrum (6a, 6b) in einer wenigstens näherungsweise in der Kettenebene liegenden Erfassungsrichtung (10a) mit dem Kettensensor (10) erfassbar ist.

4. Kettenüberwachungseinrichtung (1) nach einem der vorangehenden Ansprüche, **dadurch gekennzeichnet, dass** der Kettensensor (10, 11) als ein Kettenpositionssensor ausgeführt ist, mit der eine Position des Leertrums (6a, 6b) in eine Richtung wenigstens näherungsweise quer zu einer Hauptbewegungsrichtung des Leertrums (6a, 6b) erfassbar ist, und die Signaleinrichtung zur Abgabe eines Kettenüberwachungssignals in Abhängigkeit von einer oder mehreren erfassten Positionen des Leertrums (6a, 6b) eingerichtet ist.

5. Kettenüberwachungseinrichtung (1) nach Anspruch 2, **dadurch gekennzeichnet, dass** der Kettenpositionssensor ein elektromagnetischer, insbesondere induktiver Sensor oder ein lichtaussendender optischer Sensor, mit dem der Leertrum (6a, 6b) beleuchtbar ist und mit dem eine Lichtreflexion von dem Lasttrum (6a, 6b) zur Positionsmessung nutzbar ist, oder ein Ultraschallsensor ist.

6. Kettenüberwachungseinrichtung (1) nach einem der vorangehenden Ansprüche, **dadurch gekennzeichnet, dass** die Signaleinrichtung dazu eingerichtet ist, bei Messung eines Durchhangs des Leertrums (6a), der größer als ein erster Schwellenwert oder kleiner als ein zweiter Schwellenwert ist, und/oder bei Messung einer Schwingungsamplitude des Leertrums (6a, 6b), die insbesondere größer als ein dritter Schwellenwert oder kleiner als ein vierter Schwellenwert ist, ein Kettenüberwachungssignal abzugeben, das insbesondere eine zu geringe oder zu starke Kettenspannung oder/und eine zu starke Kettenlängung bedeutet.

7. Kettenüberwachungseinrichtung (1) nach einem der vorangehenden Ansprüche, **dadurch gekennzeichnet, dass** der Kettensensor (10, 11) als ein Kettentemperatursensor ausgeführt ist, mit dem eine Temperatur der Kette (4) ermittelbar ist.

8. Kettenüberwachungseinrichtung (1) nach Anspruch 7, **dadurch gekennzeichnet, dass** die Kettenüberwachungseinrichtung (1) weiter einen Umgebungstemperatursensor aufweist und mittels der Kettenüberwachungseinrichtung (1) eine Kettentemperatur und eine Umgebungstemperatur erfassbar sind.

9. Kettenüberwachungseinrichtung (1) nach Anspruch 8, **dadurch gekennzeichnet, dass** die Signaleinrichtung dazu eingerichtet ist, ein Signal abzugeben, wenn eine Differenz zwischen einer erfassten Kettentemperatur und einer Umgebungstemperatur einen vorgegebenen Schwellenwert überschreitet.

10. Kettenüberwachungseinrichtung (1) nach einem der Ansprüche 7 bis 9, **dadurch gekennzeichnet, dass** der der Kettentemperatursensor als Infrarotsensor ausgebildet ist.

11. Kettenüberwachungseinrichtung (1), nach einem der vorangehenden Ansprüche, **dadurch gekennzeichnet, dass** ein Steuergerät eines Fahrzeugs, insbesondere ein Motorsteuergerät, einen Teil der Kettenüberwachungseinrichtung (1) bildet, wobei Signale von dem Kettensensor (10, 11) in dem Steuergerät verarbeitet werden, wobei insbesondere in die Erzeugung eines Kettenüberwachungssignals Signale oder Informationen von anderen Sensoren als dem Kettensensor eingehen.

12. Verfahren zur Überwachung einer Kette in einem Kettentrieb, **dadurch gekennzeichnet, dass** bei dem Verfahren mittels einer Kettenüberwachungseinrichtung (1), die einen in Bezug auf den Kettentrieb stationär angeordneten, berührungslos wirkenden, elektrischen Kettensensor (10, 11) aufweist, mit dem ein Leertrum (6a, 6b) des Kettentriebs erfasst wird, ein Zustand einer Kette (4) überwacht wird und ein Kettenüberwachungssignal in Abhängigkeit von Signalen oder Daten, die von dem Kettensensor (10, 11) stammen, von einer Signaleinrichtung ausgegeben wird.

13. Verfahren nach Anspruch 12, **dadurch gekennzeichnet, dass** mittels der Kettenüberwachungseinrichtung (1) eine Kettenspannung überwacht wird, indem eine Position des Leertrums (6a, 6b) oder eine Schwingungsamplitude des Leertrums (6a, 6b) mit dem Kettensensor (10, 11) erfasst wird.

14. Verfahren nach Anspruch 12 oder 13, **dadurch gekennzeichnet, dass** mittels der Kettenüberwachungseinrichtung (1) eine Kettenreibung der Kette überwacht wird, indem eine Temperatur der Kette an dem Leertrum erfasst wird und insbesondere zusätzlich eine Umgebungstemperatur der Kette (4) erfasst wird.
